# EUROPEAN PATENT APPLICATION

(11) **EP 1 624 378 A1**
(43) Date of publication of application: **08.02.2006**
(21) Application number: 04711482.2
(22) Date of filing: 16.02.2004
(51) Int. Cl.: G06F 13/00, H04M 1/00, H04M 11/00

(54) **ELECTRONIC MAIL READ DEVICE AND ELECTRONIC MAIL EDITION DEVICE**

(30) Priority: 15.05.2003 JP 2003137006
(71) Applicant: SHARP KABUSHIKI KAISHA, Osaka-shi, Osaka 545-8522 (JP)
(72) Inventor: SHIMIZU, Junichi, Higashihiroshima-shi, Hiroshima 7390012 (JP)
(74) Representative: Müller - Hoffmann & Partner
(86) International application number: PCT/JP2004/001675
(87) International publication number: WO 2004/102397

(57) **Abstract**

An object of the present invention is to provide an e-mail editing device having excellent operability, in particular, an e-mail editing device capable of switching and displaying related e-mails. A display processor (27) simultaneously displays a message editing screen (32) for displaying an edition mail (24) and a mail reference screen (33) for displaying a reference mail (25) for reference. A reference processor (23) copies an object in the reference mail (25) to a temporary storage (22). An editor (21) pastes the object to an edition mail. A mail search portion (28) searches for an e-mail in a memory (14) on the basis of the reference mail (25). When a user performs a mail switching operation, the reference mail (25) is switched to a searched e-mail for display.

## Description

### Technical Field

The present invention relates to an electronic mail (e-mail) viewing device and an e-mail editing device and, more particularly, to improvement in an electronic apparatus having an e-mail viewing function or an e-mail editing function, for example, a cellular phone having an e-mail transmitting/receiving function.

### Background Art

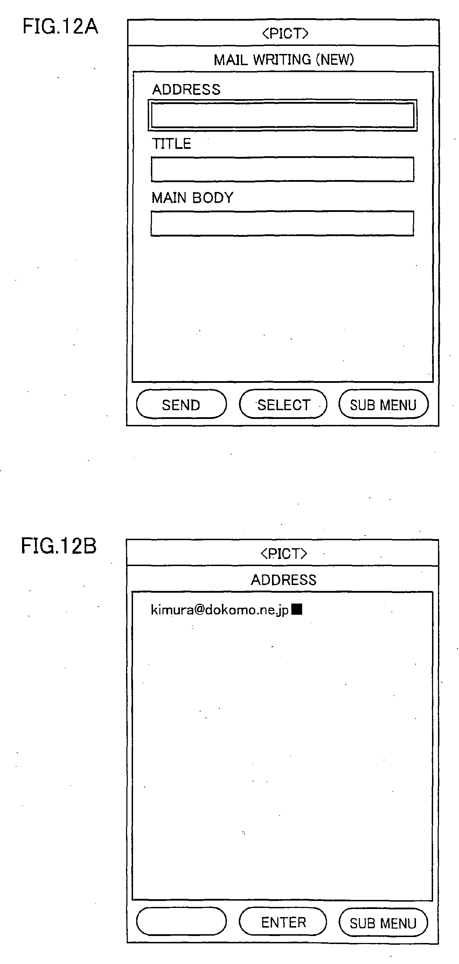

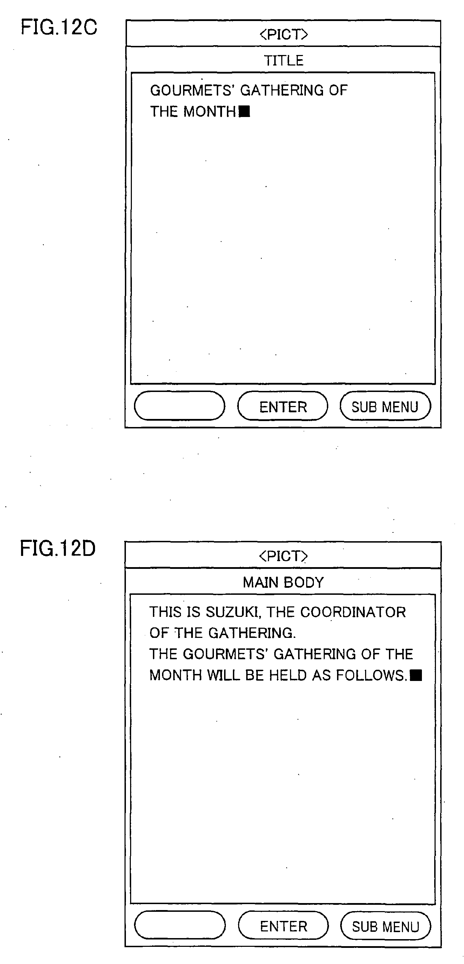

Figs. 12A to 12D are diagrams showing an example of screens displayed when an e-mail is edited in a conventional cellular phone. Fig. 12A is a menu screen for writing a new mail. Fig. 12B shows an address editing screen for editing an address. Fig. 12C shows a title editing screen for editing a title. Fig. 12D shows a message editing screen for editing a message.

Generally, an e-mail includes a plurality of data items such as address, title, message, attached file, and the like. In a cellular phone having a display screen smaller than that of a general computer, when a user edits each of the data items, an individual editing screen is displayed for each data item to be edited. The address editing screen, title editing screen, and message editing screen shown in Figs. 12B to 12D correspond to the individual editing screens.

The user who is going to write a new mail switches the individual editing screens and edits each of the data items. The switching and displaying of the individual editing screens is performed via the menu screen of Fig. 12A.

On the menu screen, editable data items are displayed and one of the data items is focused. "Focused" denotes here a state in which data can be entered in a data item, that is, a data item is in a so-called active state. The state includes, for example, a state where a frame of the data item is displayed in an emphasized manner and a state where a cursor or a prompt for data entry is displayed. The user moves the focus by a key operation to designate a desired data item. When the user presses a selection key after the designation of the data item, an individual editing screen for editing the designated data item is displayed. For example, when the user presses the selection key in a state where "address" is focused, the address editing screen as shown in Fig. 12B is displayed.

When the user wishes to switch to another individual display screen in a state where an individual editing screen is displayed, the user operates an enter key to display the menu screen. After that, by the same procedure, the user makes a desired individual display screen displayed. When the user writes a new mail, the user has to input at least an address and a message. After completion of edition of necessary data items in such a manner, the user can select "send" from sub menu key to send the mail. Alternatively, the user can select "save" to save the mail.

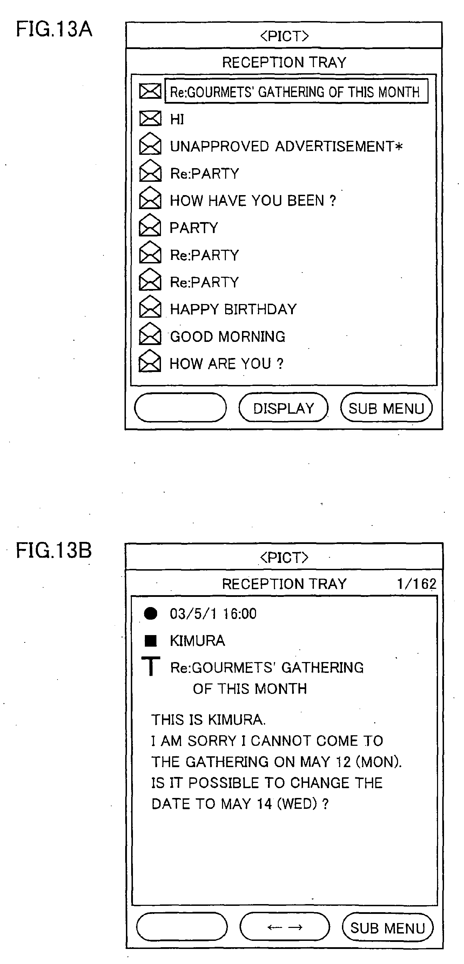

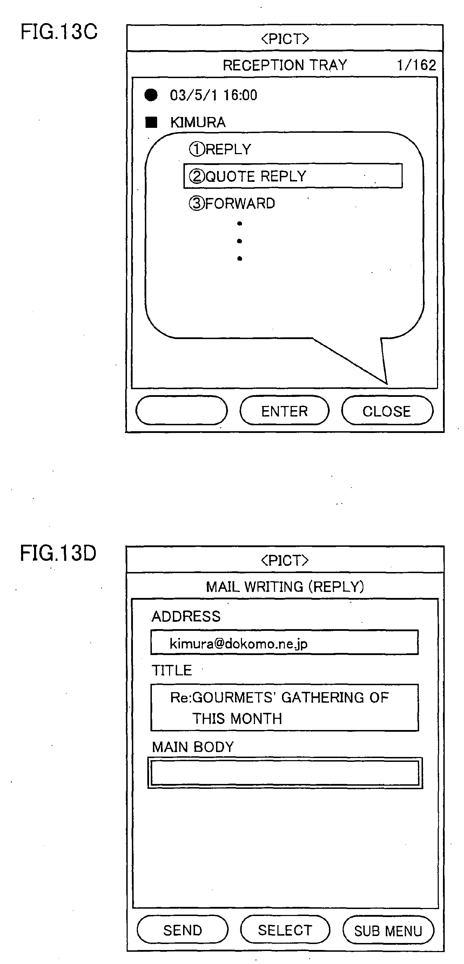

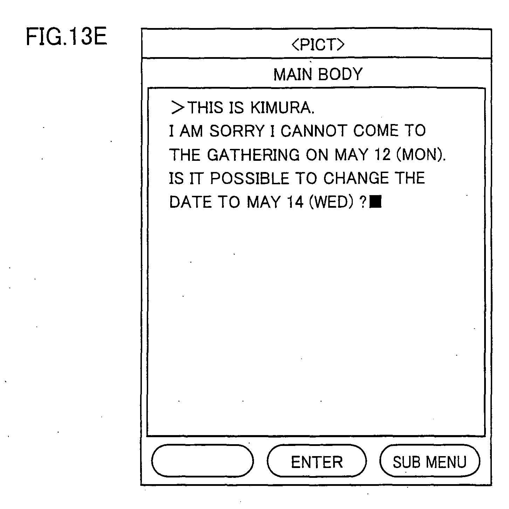

Figs. 13A to 13E are diagrams sequentially showing display screens at the time of writing a reply mail in the conventional cellular phone. Fig. 13A shows a list display screen displaying a list of incoming mails in a reception tray. Fig. 13B shows a mail viewing screen displaying the message of an incoming mail. Fig. 13C shows a sub menu display on the mail viewing screen. Fig. 13D shows a menu screen for writing a reply mail. Fig. 13E shows a message editing screen.

Received e-mails are stored in the reception tray and displayed in the list display screen shown in Fig. 13A. A focus is achieved on one of the displayed incoming mails. The user moves the focus and presses the selection key, thereby enabling a desired incoming mail to be displayed on the mail viewing screen shown in Fig. 13B.

When the user presses the sub menu key in a state where the mail viewing screen is displayed, the sub menu shown in Fig. 13C is displayed. When the user selects "reply" or "quote reply" in the sub menu, edition of an outgoing mail as a reply mail to the incoming mail being displayed can be started.

When the user selects "quote reply" from the sub menu, the menu screen shown in Fig. 13D is displayed. The menu screen is the same menu screen as that displayed at the time of writing a new mail. The screen shown in Fig. 13D is different from that displayed at the time of writing a new mail with respect to the point that data is automatically entered in the data items based on the incoming mail. For example, the sender of the incoming mail is entered in "address", the title of the incoming mail with "Re:" is entered in "title", and the body of the incoming mail is inserted as a quotation in "message". In the case where the user selects "reply", only the point that the quotation is not inserted in the message is different from the case where the user selects "quote reply". Consequently, in the specification, unless otherwise specified, it is assumed that "reply" includes "quote reply".

When the user replies to the sender of the incoming mail, it is considered that the user often edits only the body and sends the resultant mail. In this case, the user makes the menu screen of Fig. 13D displayed and focuses "message" to display the message editing screen of Fig. 13E. The user edits the message and sends the resultant mail.

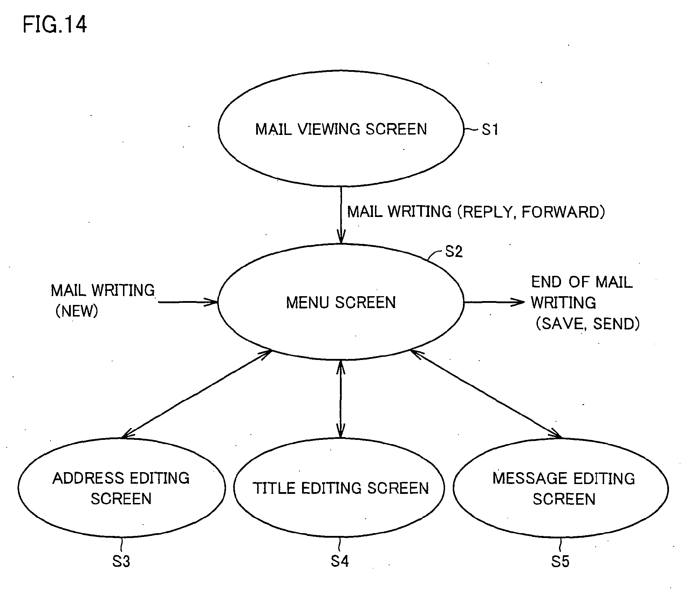

Fig. 14 is a state transition diagram showing an operating procedure at the time of mail edition in the conventional cellular phone. As shown in Fig. 14, the state includes a display state S1 of a mail viewing screen, a display state S2 of a menu screen for mail writing, a display state S3 of an address editing screen, a display state S4 of a title editing screen, and a display state S5 of a message editing screen.

When the user writes a new mail, first, the menu screen is displayed (display state S2) and, after that, the menu screen changes to an individual edition screen display state (S3 to S5). The individual editing screens are changed via the menu screen. On the other hand, a state in which the user is viewing an incoming mail is the display state S1. In the case where the user writes a reply mail, first, the display state S1 changes to the menu screen display state S2. After that, the states change in the same manner as that of writing of a new mail.

As an example, Japanese Patent Laying-Open No. 2002-351789 discloses a portable terminal apparatus in which a plurality of display areas can be effectively used. The portable terminal apparatus includes means for switching between a mode of displaying information in the plurality of display areas in one screen and a mode of displaying information in the entire single screen.

In the portable terminal apparatus, display of information in the display areas can be switched by switching the modes, so that the plurality of display areas can be effectively utilized.

Japanese Patent Laying-Open No. 2003-125041 discloses an electronic mail send/receive system enabling a list of plural messages to be displayed. The system includes display means which displays an e-mail on a display screen and control means for displaying one message in a plurality of message areas generated by dividing the area of the display screen.

In the system, as a mail received/sent recently among send/receive mails is displayed, the latest information can be shared among users. It enables communications among a plurality of users.

### Disclosure of the Invention

In a conventional cellular phone, an e-mail to be displayed on the mail viewing screen has to be selected by a user on the list display screen. Consequently, when the user wishes to refer to a plurality of e-mails, the user has to sequentially select the e-mails on the list display screen and sequentially display them on the main viewing screen. For example, when a plurality of e-mails are sent to/from a specific person regarding the same article or a related article, there is a case that the user wishes to read the series of incoming and sent mails. In such a case, a problem arises such that the user himself/herself has to determine whether e-mails are related or not and, further, select the related e-mails one by one on the list display screen.

In many cases, when writing a reply mail, it is convenient if the user can write a reply mail while referring to the original incoming mail. In such a case, for example, when "quote reply" is selected, it is convenient since the body of the incoming mail is quoted as a body of an outgoing mail. However, in the case where the number of letters of a mail body is limited, an unnecessary quotation has to be deleted. There is also a case that the user wishes to partially or entirely edit or delete a quotation or wishes to refer to a quotation after deleting the quotation.

In the conventional cellular phone, in such cases, there is no other way but the user temporarily saves an outgoing mail being edited and reads the original incoming mail on the main viewing screen. Moreover, after viewing, the user has to finish the mail viewing screen, display the menu screen again for displaying the saved outgoing mail, and focus and select the body to display the original message editing screen. In short, the conventional cellular phone has a problem such that the user has to perform very complicated operations to read an incoming mail during edition of an outgoing mail.

Further, when there are a plurality of related e-mails, sometimes, the user wishes to refer to two or more e-mails during writing of a reply mail. In such a case, a problem arises such that the user has to repeat the complicated work.

The present invention has been achieved to solve the problems. An object of the present invention is to provide an e-mail viewing device capable of displaying related e-mails. The object is, particularly, to provide an e-mail viewing device capable of switching and displaying related e-mails without complicated operations.

Another object of the present invention is to provide an e-mail viewing device capable of extracting sent/received mails of the same person and switching and displaying the extracted mails.

Still another object of the present invention is to provide an e-mail viewing device capable of switching and displaying e-mails in time sequence in accordance with transmission/reception time.

Yet another object of the present invention is to provide an e-mail editing device capable of easily writing a reply mail. The object is, particularly, to provide an e-mail editing device capable of easily referring to two or more e-mails related to an outgoing mail.

In order to achieve the objects, according to an aspect of the present invention, an e-mail viewing device includes: a mail storage storing a plurality of e-mails; a display processor displaying an e-mail stored in the mail storage onto a mail viewing screen; an operation input unit for a user to enter a mail switching operation for switching an e-mail on the mail viewing screen; and a mail search portion searching for an e-mail stored in the mail storage on the basis of the e-mail displayed on the mail viewing screen. The display processor displays an e-mail extracted by the mail search portion on the basis of the mail switching operation of the user.

With such a configuration, an e-mail related to the e-mail displayed on the mail viewing screen can be searched and the e-mail extracted by the search operation can be displayed on the mail viewing screen. Consequently, when the user performs the mail switching operation, the e-mail being displayed on the mail viewing screen can be switched to the e-mail related to the displayed e-mail. Therefore, without performing complicated operations, a related e-mail can be switched and displayed.

Preferably, the mail search portion extracts an e-mail whose sender or address matches the sender of an incoming mail displayed on the mail viewing screen. With the configuration, the user can search for a related e-mail on the basis of the mail address. The user can extract a series of e-mails sent to/received from the same person by using the mail address as a search key. As compared with the case of using another data item as the search key, extraction of e-mails which are not so related can be suppressed.

Preferably, the mail storage stores an outgoing mail and an incoming mail. The mail search portion checks with the address of the outgoing mail or the sender of the incoming mail. With such a configuration, the user can extract outgoing mails and incoming mails whose sender and receiver is the same person.

Preferably, the mail search portion searches for an e-mail stored in the mail storage on the basis of an e-mail designated by the user. With the configuration, the user can display e-mails related to a desired e-mail. When there are two or more e-mails related to the e-mail designated by the user, the user can sequentially switch and display the mails on the e-mail viewing device.

According to another aspect of the present invention, an e-mail viewing device includes: a mail storage storing a plurality of e-mails; a display processor displaying an e-mail stored in the mail storage onto a mail viewing screen; an operation input unit for a user to enter a mail switching operation for switching an e-mail on the mail viewing screen; and a mail search portion searching for an e-mail stored in the mail storage on the basis of the e-mail designated by the user. The display processor displays the e-mail extracted by the mail search portion on the basis of the mail switching operation of the user.

Preferably, the mail storage stores an e-mail together with transmission/reception time of the e-mail. The mail search portion extracts e-mails matching a search condition in time sequence of the transmission/reception times. The display processor sequentially switches and displays an e-mail extracted by the mail search portion on the basis of a mail switching operation of the user. With such a configuration, when there are two or more e-mails related to the e-mail designated by the user, the user can switch and display the mails in the time sequential order on the e-mail viewing device.

Preferably, a movement direction on the time base is designated by the user as a mail switching operation on the operation input unit. The mail search portion sequentially extracts the e-mails matching the search condition in the movement direction on the time base. The display processor sequentially switches and displays e-mails extracted by the mail search portion each time the user performs a mail switching operation.

With such a configuration, the user can sequentially switch and display e-mails in the movement direction on the time base designated by the user in the e-mail viewing device. That is, a series of e-mails are sequentially switched and displayed from the oldest e-mail or the latest e-mail.

Preferably, an e-mail designated by the user is an e-mail displayed on the mail viewing screen when the mail switching operation is performed for the first time. With such a configuration, the user can sequentially switch and display e-mails related to a specific e-mail without performing an operation input for designating an e-mail.

According to still another aspect of the present invention, an e-mail editing device includes: a mail storage storing a plurality of reference mails; a display processor simultaneously displaying a mail edition screen displaying an edition mail and a mail reference screen displaying a reference mail; a temporary storage storing data; a reference processor copying an object in a reference mail to the temporary storage; an editor pasting the object in the temporary storage into an edition mail; an operation input unit for a user to enter a mail switching operation for switching a reference mail on the mail reference screen; and a mail search portion searching for the reference mail stored in the mail storage on the basis of the reference mail displayed on the mail reference screen. The display processor displays the reference mail extracted by the mail search portion onto the mail reference screen on the basis of the mail switching operation of the user.

With such a configuration, when the user edits an e-mail on the mail editing screen while referring to the mail reference screen, the mail search portion searches for an e-mail related to an e-mail displayed on the mail reference screen. An e-mail extracted by the search operation is displayed on the mail reference screen. Consequently, when the user performs the mail switching operation, related reference mails are switched and displayed. Thus, the user can edit an edition mail while referring to the reference mails.

According to yet another aspect of the present invention, an e-mail editing device includes: a mail storage storing a plurality of reference mails; a display processor simultaneously displaying a mail edition screen displaying an edition mail and a mail reference screen displaying a reference mail; a temporary storage storing data; a reference processor copying an object in a reference mail to the temporary storage; an editor pasting the object in the temporary storage into an edition mail; an operation input unit for a user to enter a mail switching operation for switching a reference mail on the mail reference screen; and a mail search portion searching for the reference mail stored in the mail storage on the basis of the reference mail designated by the user. The display processor displays the reference mail extracted by the mail search portion onto the mail reference screen on the basis of the mail switching operation of the user. With such a configuration, reference mails related to a desired reference mail are displayed on the mail reference screen. When there are two or more reference mails related to the reference mail designated by the user, the mails are sequentially switched and displayed.

According to yet another aspect of the present invention, an e-mail editing device includes: a mail storage storing data of each of a plurality of e-mails; an operation input unit for a user to enter an instruction regarding display of the plurality of e-mails; a mail search portion searching for an e-mail stored in the mail storage on the basis of data of the e-mail displayed according to the instruction; a display processor generating edition screen data for displaying the contents of an edition mail whose data is rewritable and reference screen data for displaying the searched e-mail as a reference mail whose data cannot be rewritten on the basis of the data in response to an instruction given by the user; and a display displaying a mail edition screen displaying the contents of the edition mail and a mail reference screen displaying the contents of the reference mail on the basis of the edition screen data and the reference screen data.

Preferably, the e-mail editing device further includes: a temporary storage temporarily storing data; a reference processor storing object data included in the reference mail to the temporary storage; and an editor inserting object data stored in the temporary storage into the edition mail.

Preferably, the mail search portion searches for an e-mail stored in the mail storage on the basis of a reference mail displayed on the mail reference screen.

Preferably, the mail search portion extracts an e-mail whose sender or address matches the sender of the reference mail.

Preferably, the mail search portion searches for an e-mail stored in the mail storage on the basis of the reference mail designated by the user.

Preferably, the mail storage stores at least one of transmission time and reception time of the e-mail. The mail search portion sequentially extracts e-mails matching a search condition included in the reference mail designated by the user at the transmission time or the reception time. The display processor sequentially switches and displays the extracted e-mails on the basis of the mail switching operation of the user.

Preferably, the operation input unit receives an input of a movement direction on a time base designated by the user. The mail search portion sequentially extracts e-mails matching the search condition in the movement direction on the time base.

Preferably, the e-mail editing device further includes an input detector for detecting an input of the mail switching operation. An e-mail designated by the user is a mail displayed on the mail viewing screen when the mail switching operation is input for the first time.

In the e-mail editing device according to the present invention, when the user edits the body of an e-mail, the message editing screen and the mail referring screen can be simultaneously displayed. Consequently, the user can edit the body of an outgoing mail while viewing an incoming mail. Therefore, the user can write an e-mail efficiently.

In the e-mail viewing device according to the present invention, when the user enters a mail switching operation, display of an e-mail is switched to display of a searched e-mail. Therefore, the user can switch to display of another e-mail related to an e-mail being displayed without performing complicated operations.

In the e-mail viewing device according to the present invention, the user can change display of a reference mail on the basis of a key operation. Consequently, the user can perform a mail editing work while viewing and referring to a desired e-mail, so that operability of the e-mail editing device can be improved.

### Brief Description of the Drawings

Fig. 1 is a block diagram showing an example of the configuration of an e-mail editing device according to a first embodiment of the present invention.
Figs. 2A to 2E are diagrams showing display screens at the time of writing a reply mail in the e-mail editing device of Fig. 1 in order.
Fig. 3 is a state transition diagram showing an operating procedure at the time of mail edition in the e-mail editing device of Fig. 1.
Fig. 4 is a diagram showing an example of a screen display at the time of editing a body for writing a reply mail.
Figs. 5A to 5D are diagrams specifically showing an example of the procedure at the time of editing the body of a mail in Fig. 2D.
Fig. 6 is a block diagram showing an example of the configuration of the main part of an e-mail editing device according to a second embodiment of the present invention.
Fig. 7 is a flowchart showing an example of operation at the time of writing a reply mail.
Fig. 8 is a flowchart showing an example of operation in a referring process (step S105) in Fig. 7.
Fig. 9 is a block diagram showing an example of the configuration of the main part of an e-mail editing device according to a third embodiment of the present invention.
Fig. 10 is a flowchart showing an example of operations at the time of writing a reply mail.
Figs. 11A to 11D are diagrams specifically showing an example of the procedure at the time of editing the body of a reply mail.
Figs. 12A to 12D are diagrams showing an example of screens displayed at the time of editing an e-mail in a conventional cellular phone.
Figs. 13A to 13E are diagrams sequentially showing display screens at the time of writing a reply mail in the conventional cellular phone.
Fig. 14 is a state transition diagram showing an operating procedure at the time of mail edition in the conventional cellular phone.

### Best Modes for Carrying Out the Invention

Embodiments of the present invention will be described below with reference to the drawings. In the following description, the same reference numeral is given to the same parts. The names and functions of the parts are the same. Therefore, their detailed description will not be repeated.

### First Embodiment

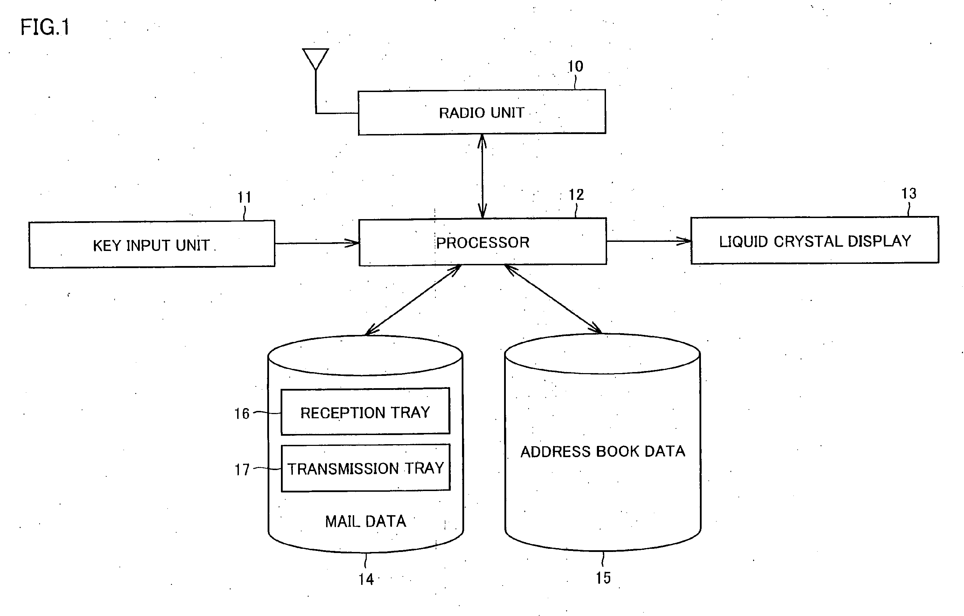

Fig. 1 shows a cellular phone as an example of a portable electronic apparatus capable of editing and transmitting/receiving an e-mail. Referring to Fig. 1, the cellular phone includes a radio unit 10 for transmitting/receiving a radio signal, a key input unit 11 on which a key operation is performed by a user, a processor 12 for executing e-mail editing processes, a liquid crystal display 13 for displaying a screen, a memory 14 for storing e-mails, and a memory 15 for storing address book data.

Mail data in memory 14 is stored so as to be divided into a number of folders. A case where mail data is divided into two folders in a reception tray 16 for storing incoming mails and a transmission tray 17 for storing outgoing mails will be described here.

Radio unit 10 transmits or receives an e-mail on the basis of an instruction of processor 12. The e-mail received by radio unit 10 is stored as an incoming mail into reception tray 16 by processor 12. In the case where the user performs a key operation for mail edition, processor 12 displays a screen for mail edition on liquid crystal display 13 and performs e-mail editing processes on the basis of an output signal from key input unit 11. The edited e-mail is stored into transmission tray 17 by processor 12 or transmitted by radio unit 10.

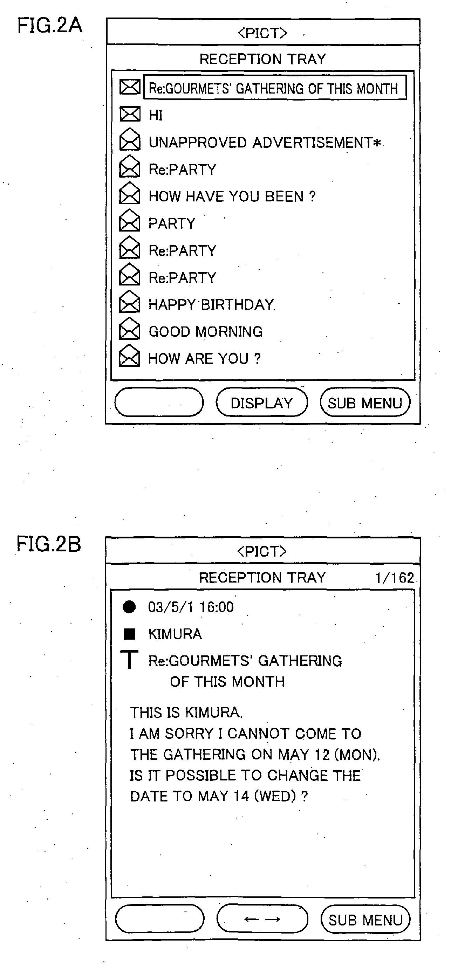

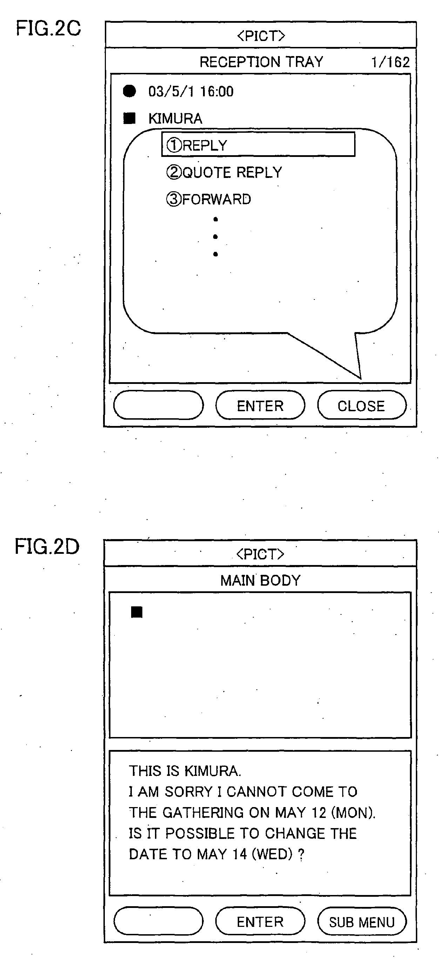

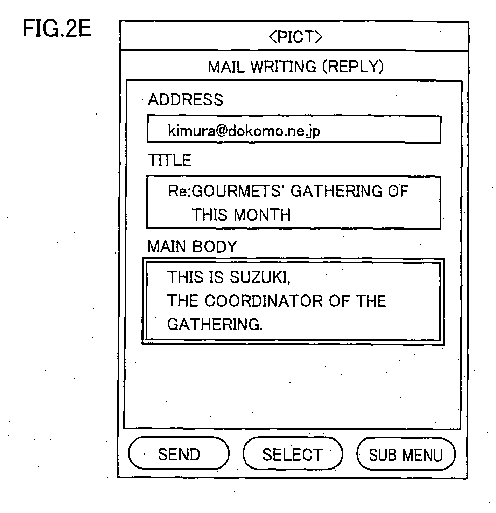

Fig. 2A shows a list display screen displaying a list of incoming mails in reception tray 16. Fig. 2B shows a mail viewing screen displaying the message of an incoming mail. Fig. 2C shows a sub menu display on the mail viewing screen. Fig. 2D shows a message editing screen for writing a body of a reply mail. Fig. 2E shows a menu screen for selecting a data item to be edited.

The contents shown in Figs. 2A to 2C are the same as those shown in Figs. 13A to 13C related to a conventional technique. Specifically, in the mail list screen of Fig. 2A, a list of incoming mails is displayed. When the user selects any of the incoming mails, as shown in Fig. 2B, the message of the selected incoming mail is displayed on the mail viewing screen. When the user presses the sub menu key in this state, the sub menu is displayed as shown in Fig. 2C.

In the case where the user selects "reply" or "quote reply" from the sub menu in Fig. 2C, a message editing screen is displayed as shown in Fig. 2D. At this time, in a conventional cellular phone, a menu screen is displayed as shown in Fig. 13D. Therefore, to edit the body of an outgoing mail, the user has to select "message" in the menu screen. However, when the user writes a reply mail, the e-mail editing device according to the embodiment displays the message editing screen first without displaying the menu screen. The display screen in Fig. 2D is different from that in Fig. 13E. This point will be described in detail in the second embodiment.

The subsequent operating procedure is the quite same as that in the case of the conventional cellular phone. Specifically, when the user wishes to switch to another individual display screen such as an address editing screen or a title editing screen, it is sufficient for the user to temporarily display the menu screen shown in Fig. 2E and select a data item of which individual editing screen is desired to be displayed. When the user wishes to send or store an outgoing mail without editing another data item, the user can send or store the mail by selecting "send" or "save" from the sub menu key.

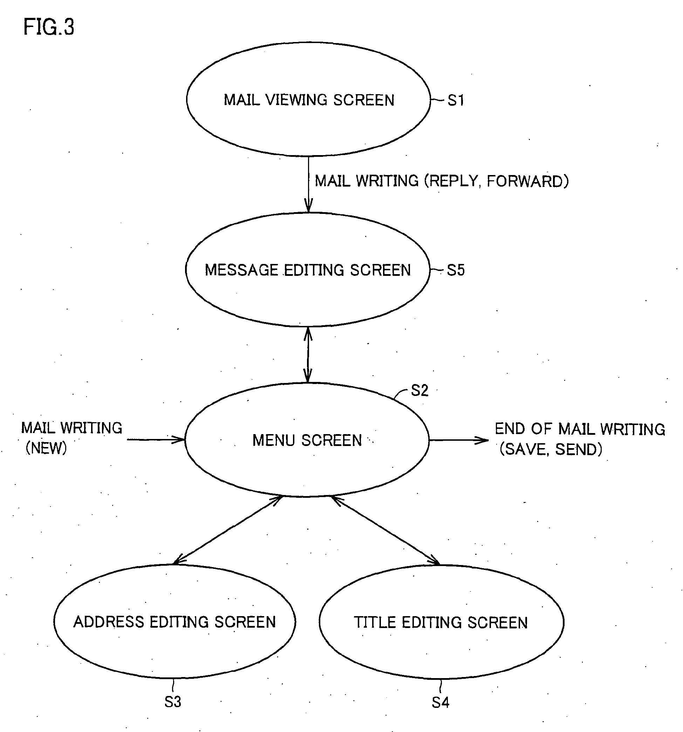

Referring to Fig. 3, a state transition diagram showing an operating procedure at the time of editing a mail in the e-mail editing device of Fig. 1 will be described. As shown in Fig. 3, the state includes the display state S1 of the mail viewing screen, the display state S2 of the menu screen for mail writing, the display state S3 of the address editing screen, the display state S4 of the title editing screen, and the display state S5 of the message editing screen.

Fig. 3 is the same as Fig. 14 of the conventional technique except for the point that the arrow from the display state S1 goes to not the display state S2 but to the display state S5. To be specific, in the case where the user instructs a reply in the mail viewing screen display state S1, the display state changes to the message editing screen display state S5. After that, the display state can freely change among the display states S3 to S5 of the individual editing screens via the menu screen display state S2.

When the user instructs writing of a reply mail, the e-mail editing device according to the embodiment directly displays the message editing screen as one of the individual editing screens without displaying the menu screen. Consequently, the user can start editing the body without selecting the message from the menu screen. In such a manner, by displaying the message editing screen having the highest use frequency first at the time of writing of a reply mail, the user can write a reply mail by the smaller number of operations. Thus, the operability of the e-mail editing device can be improved.

On the other hand, the e-mail editing device can switch displays among the individual editing screens via the menu screen after display of the message editing screen in the same manner as that of the conventional technique. Consequently, in the case where it is necessary to edit another data item, the user can switch to another individual editing screen after display of the message editing screen.

Although the case where the user writes a reply mail has been described in the embodiment, the present invention can be also applied to the case where the user writes a forwarded mail. Specifically, when the user instructs writing of a forwarded mail, the e-mail editing device is allowed to directly display the message editing screen without displaying the menu screen. In the case of writing a forwarded mail, as the use frequency of the address editing screen is the highest, the address editing screen may be displayed first in place of the message editing screen in the e-mail editing device.

### Second Embodiment

In the first embodiment, the order of displaying the menu screen and the individual editing screens has been described. In a second embodiment, the screen display at the time of editing a body in an outgoing mail and editing operation on the screen will be described in detail.

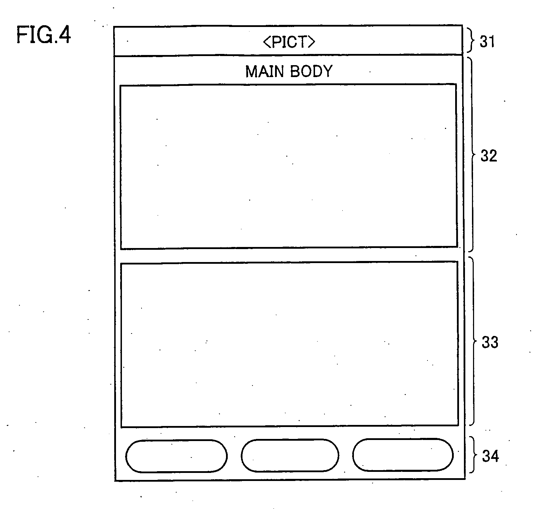

Referring to Fig. 4, an example of displaying a screen at the time of editing a body for writing a reply mail will be described. The display screen includes a pictograph display unit 31, a message editing screen 32, a mail reference screen 33, and a SW key display unit 34. The cellular phone according to the embodiment is different from a conventional one with respect to the point that not only message editing screen 32 but also mail reference screen 33 are displayed:
Pictograph display unit 31 is an area in which the operating states of a cellular phone such as an electric wave reception state and battery remaining quantity are always displayed as a pictograph. SW key display unit 34 is an area displaying functions assigned to the SW (software) keys, which are different from each other according to the operating states. Message editing screen 32 is a screen for editing the body of an outgoing mail like the conventional message editing screen. Display units 31 and 34 and message editing screen 32 are similar to those of the conventional cellular phone shown in Fig. 13E.

Mail reference screen 33 is a screen on which an original incoming mail is displayed so as to be viewed and referred to by the user. The user cannot edit the incoming mail on the screen. On the screen, the user can perform only viewing operations including scrolling and a referring operation for copying partially or entirely the body of an incoming mail to temporary storing means.

Message editing screen 32 and the mail reference screen 33 are simultaneously displayed by dividing part of the display area of liquid crystal display 13 into windows. In this case, message editing screen 32 is displayed as an upper window and mail reference screen 33 is displayed as a lower window. On message editing screen 32, a reply mail (an edition mail) to be edited is displayed editably. On mail reference screen 33, the original incoming mail (a reference mail) to be viewed and referred to is displayed.

Consequently, the user can edit the body of an outgoing mail on message editing screen 32 while viewing the incoming mail on mail reference screen 33. The user can copy an arbitrary character string in the incoming mail on mail reference screen 33 and paste it onto message editing screen 32.

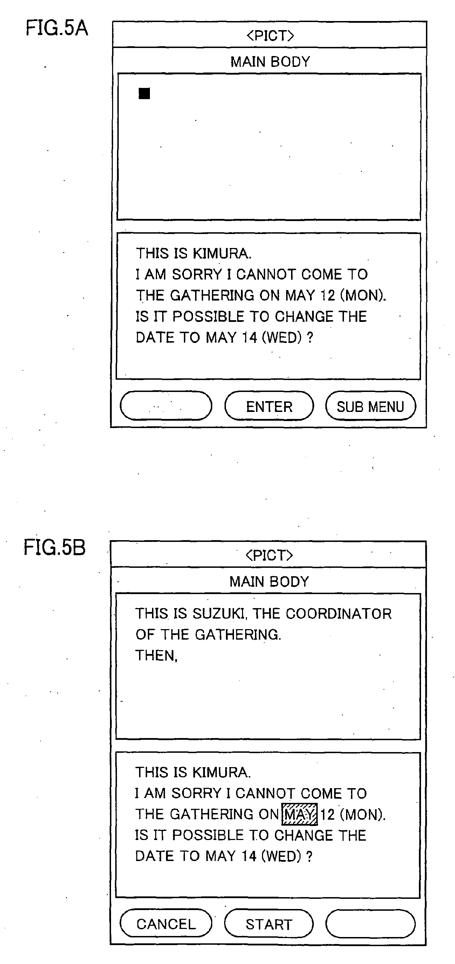

Referring to Figs. 5A to 5D, an example of the procedure taken when the user edits the body of a mail in Fig. 2D will be described in detail. Fig. 5A shows a state where message editing screen 32 and mail reference screen 33 are simultaneously displayed in response to an instruction of reply given by the user. Although two screens 32 and 33 are simultaneously displayed, a screen to be controlled by the user is one of them, and a cursor is displayed on the screen to be controlled. When the user starts editing the body of an e-mail, first, message editing screen 32 becomes an object to be controlled. Consequently, in Fig. 5A, the cursor is displayed on message editing screen 32 and the user can edit the message in a manner similar to that at the time of conventional edition of a body.

The user can select either message editing screen 32 or mail reference screen 33 as a screen to be controlled by a key operation. The cursor moves between the two screens 32 and 33 according to the change in an object to be controlled. It is assumed here that the cursor can be moved between the two screens 32 and 33 by pressing a cursor-movement key long. For example, when the cursor lies on message editing screen 32, by pressing the down arrow cursor key long, the user can move the cursor to mail reference screen 33. On the contrary, in the case where the cursor lies on mail reference screen 33, by pressing an upward cursor key, the user can move the cursor to message editing screen 32. The press long denotes a state where a predetermined key is pressed for time longer than predetermined time.

Fig. 5A shows a state where the cursor on message editing screen 32 is moved onto mail reference screen 33 and the object to be controlled is changed to mail reference screen 33. When the user operates the cursor-movement key in this state, an incoming mail (a reference mail) can be scrolled and the contents of the mail can be displayed. Consequently, even if the number of characters or lines of the reference mail is larger than that of mail reference screen 33, a character string desired by the user can be displayed on mail reference screen 33.

The user moves the cursor on mail reference screen 33 to sequentially designate the start and end points, thereby enabling a character string designated by the start and end points to be stored in a temporary storage (not shown). The function is the same as a so-called copying function. In the embodiment, the user does not have to perform a key operation of instructing copying. That is, only by moving the cursor from message editing screen 32 to main reference screen 33 by the user, the e-mail editing device can automatically enter the copy mode in which the start point of an object to be copied can be immediately designated.

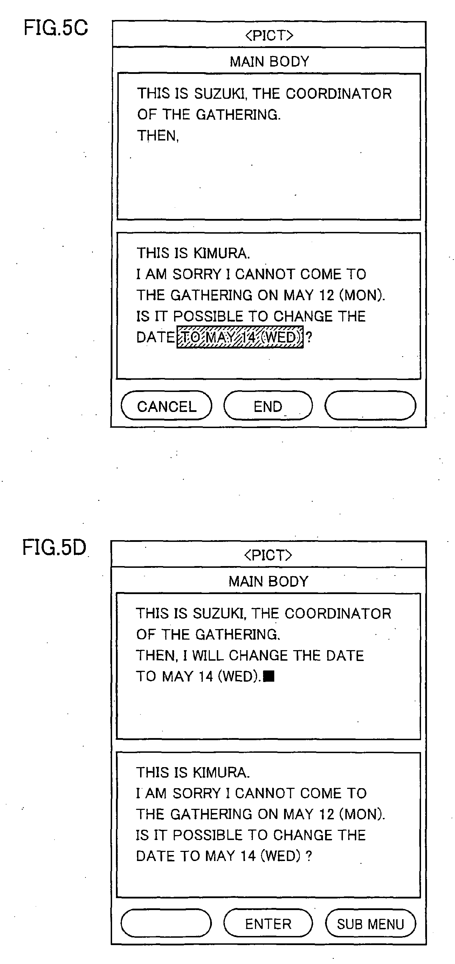

Therefore, when the user moves the cursor in mail reference screen 33, moves the cursor to the start point of the character string to be copied and presses the start key, designation of the start point is completed. By the operation, a state in which the end point of the character string can be designated is obtained. Fig. 5C shows the state at this time.

After that, when the user moves the cursor to the end point of the character string to be copied and presses the end key, designation of the end point is also completed. After completion of designation of the start and end points, the cursor automatically returns to message editing screen 32 and the character string stored in the temporary storage is automatically pasted onto message editing screen 33. Fig. 5D shows the state at this time.

When the cursor automatically returns to message editing screen 32 on completion of designation of the object to be copied on mail reference screen 33, and the paste is automatically performed, the user does not have to perform the key operation of instructing the cursor movement between the screens. The user does not also have to perform the key operation of instructing pasting. Thus, the number of key operations by the user can be decreased.

The cursor position when the cursor returns to message editing screen 32 on completion of copying is the cursor position when the user instructs cursor movement to mail reference screen 33 on message editing screen 32. A character string corresponding to the cursor position, which is stored in the temporary storage is automatically pasted. In a manner similar to the conventional technique, when the user also performs key operations of instructing paste, the character string can be pasted again and again in an arbitrary cursor position. The subsequent editing operation is the same as that of the conventional cellular phone.

In the case where the user performs the key operation of instructing cursor movement to message editing screen 32 even before completion of designation of an object to be copied on mail reference screen 33, that is, in the case where the user presses the upward cursor-movement key long, the cursor returns onto message editing screen 32. In this case, the pasting process as described above is not performed. Consequently, an unintended character string can be prevented from being pasted onto message editing screen 32 at the time of cursor movement between screens.

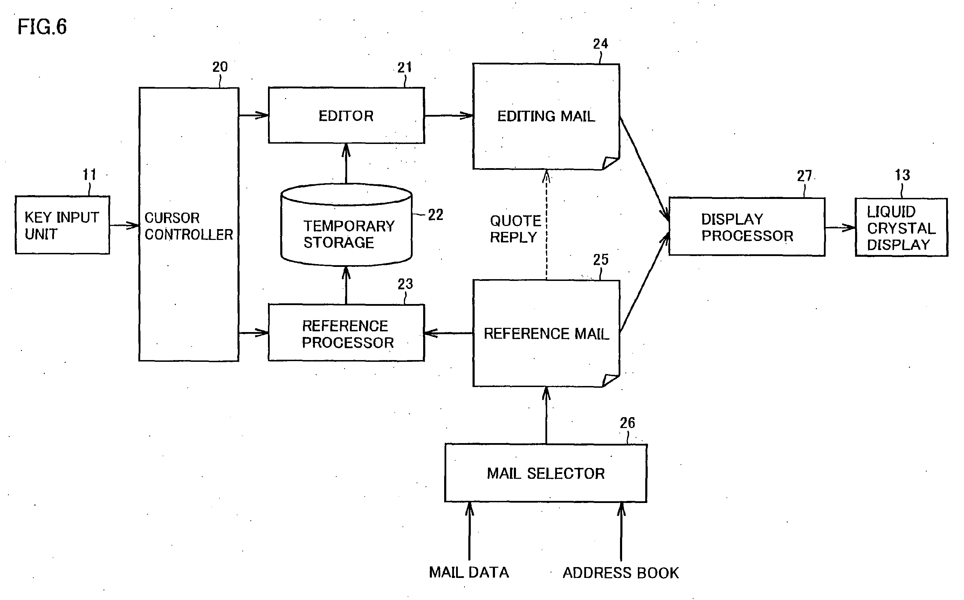

Fig. 6 shows an example of the configuration of an e-mail editing device according to the second embodiment of the present invention. With reference to Fig. 6, an example of the editing process in processor 12 of Fig. 1 will be described. The e-mail editing device includes a cursor controller 20, an editor 21, a temporary storage 22, a reference processor 23, an edition mail 24, a reference mail 25, a mail selector 26, and a display processor 27.

Edition mail 24 is an outgoing mail being edited, which is displayed on the message editing screen. Editor 21 performs processes of editing mail 24 on the basis of key operations of the user. Reference mail 25 is an incoming mail displayed on the mail reference screen. Reference processor 23 performs processes of referring to reference mail 25 on the basis of the key operations of the user.

Temporary storage 22 is storing means for temporarily storing an object in reference mail 25 designated by the user and stores an object by reference processor 23 at the time of a copying process. The object includes data such as a character string, an image, and music. The object in temporary storage 22 is read by editor 21 and inserted into edition mail 24 at the time of a pasting process.

Display processor 27 generates screen data for message editing screen 32 and mail reference screen 33 and outputs the screen data to liquid crystal display 13. Display processor 27 displays edition mail 24 onto message editing screen 32 and displays reference mail 25 onto mail reference screen 33, thereby displaying edition mail 24 and reference mail 25 simultaneously.

Cursor controller 20 switches and selects an operation screen, specifically, a screen as an object of the user operation on the basis of the user's key operations. Only when one of the screens is selected as an operation screen by cursor controller 20, editor 21 or reference processor 23 executes predetermined processes. Specifically, when message editing screen 32 is selected as an operation screen, editor 21 is activated. When mail reference screen 33 is selected as an operation screen, reference processor 23 is activated.

Mail selector 26 reads a predetermined incoming mail as reference mail 25 from memory 14. Mail selector 26 checks the mail address in reference mail 25 with data as an address book in memory 15. When a character string corresponding to the mail address is defined in the data, mail selector 26 replaces the mail address with a character string. In the case where the user instructs quote reply, the message in reference mail 25 is inserted as a quotation into the message of edition mail 24.

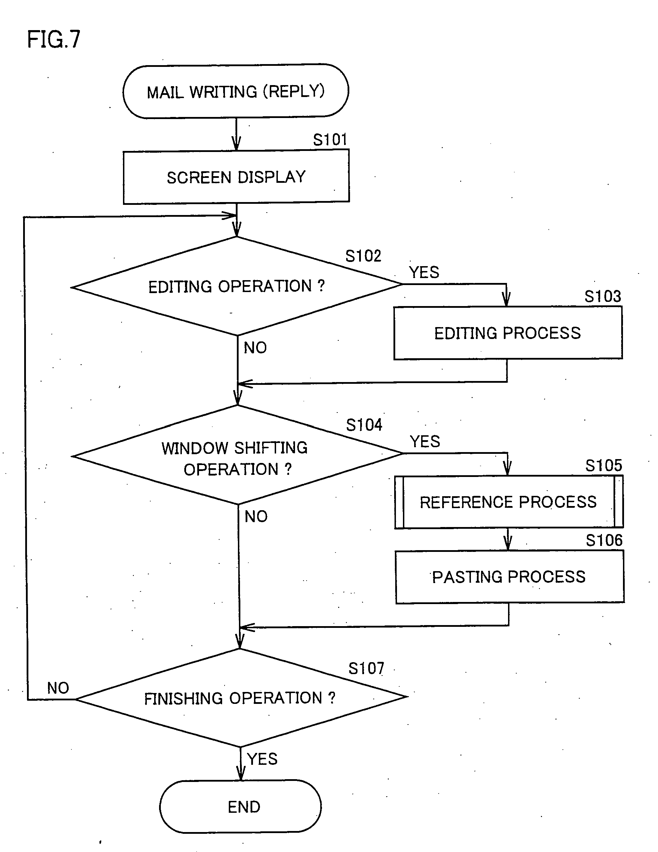

Steps S101 to S107 in the flowchart of Fig. 7 show an example of the operations performed at the time of writing a reply mail. When the user gives an instruction of writing a reply mail, mail selector 26 reads reference mail 25 from memory 14. If the mail is a quote reply, mail selector 26 makes quotation to edition mail 24 (step S101).

First, message editing screen 32 becomes an operation screen. Consequently, cursor controller 20 makes editor 21 active and makes reference processor 23 inactive. Therefore, the user can perform normal message editing operations, operations of moving the cursor between windows, and edition finishing operations on message editing screen 32 (steps S102, S104, and S107).

In the case where the user performs editing operations such as entry or deletion of characters, editor 21 performs normal editing processes on an edition mail (step S 103). When the user instructs to finish edition, the process of editing a reply mail is finished (YES in step S107). Storage, deletion, or transmission of mail data being edited corresponds to the finish of edition. Except for deletion, usually, an outgoing mail is stored in transmission tray 17 in memory 14.

On the other hand, when the user instructs movement between windows, cursor controller 20 switches a screen to be controlled. Specifically, cursor controller 20 makes editor 21 inactive and makes reference processor 23 active. After that, reference processor 23 performs a referring process (step S105). On completion of the referring process, the screen to be controlled is switched again and editor 21 becomes active. Editor 21 performs pasting processes (step S106).

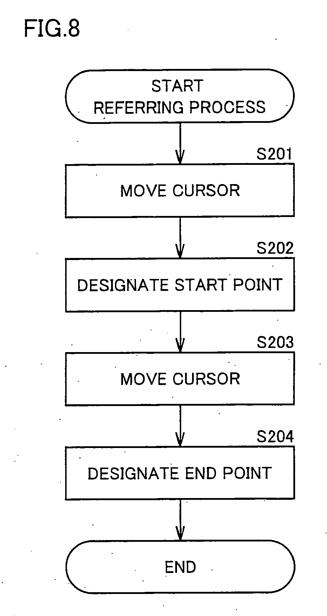

Steps S201 to S204 in the flowchart of Fig. 8 show an example of operation in the referring process (step S105) in Fig. 7. The user operates the cursor-movement key to move the cursor on mail reference screen 33 (step S201). At this time, the display screen is scrolled as necessary. When the user operates the enter key, the start point of an object to be copied is determined (step S202). The start point is given as a cursor position at the time of operating the enter key.

After determination of the start point, the user operates the cursor-movement key again to move the cursor to the end point of the object to be copied (step S203). When the user operates the enter key again, the end point of the object is determined (step S204). That is, the start and end points are given as the cursor positions when the user operates the enter key. After the start and end points are determined in such a manner, reference processor 23 stores the designated object into temporary storage 22 and finishes the referring process.

According to the embodiment, when the user edits the body of an e-mail in the reply mail editing device, the message editing screen and the mail reference screen can be simultaneously displayed. Consequently, the user can view or refer to an incoming mail without storing an outgoing mail being edited and temporarily closing the message editing screen. That is, the user can edit the body of an outgoing mail while viewing an incoming mail. The user can edit the body of an outgoing mail while copying an object included in the incoming mail to temporary storage 22 and pasting it to an outgoing mail being edited.

According to the embodiment, when the user moves the cursor from message editing screen 32 to mail reference screen 33, the e-mail editing device comes to be able to start designating an object in reference mail 25 to be copied. Therefore, as it becomes unnecessary for the user to instruct for copying processes after movement of the cursor to mail reference screen 33, the operability of the e-mail editing device improves.

According to the embodiment, after completion of designation of an object to be copied on mail reference screen 33, the object is copied in temporary storage 22 and, in addition, the cursor moves to message editing screen 32. After completion of the copying process on mail reference screen 33, as it becomes unnecessary for the user to perform the key operation for instructing cursor movement between screens 32 and 33, the operability of the e-mail editing device improves.

According to the embodiment, when the cursor moves from mail reference screen 33 to message editing screen 32, an object in temporary storage 22 is pasted onto message editing screen 32. As becomes unnecessary for the user to perform the key operation to instruct pasting, operability of the e-mail editing device improves.

### Third Embodiment

In the first and second embodiments, an example of an e-mail editing device in which an original incoming mail is displayed on mail reference screen 33 when the user writes a reply mail or a forwarded mail has been described. In a third embodiment, an e-mail editing device which searches for another e-mail related to the incoming mail and displays the e-mail on mail reference screen 33 will be described.

Generally, transmission and reception of a plurality of e-mails to/from a specific person are often alternatively repeated with respect to the same article or a related article. In such a case, at the time of writing a reply mail, sometimes, it is insufficient to just refer to the immediately preceding incoming mail. In other words, sometimes, the user wishes to refer to an old incoming mail from the specific person or a mail already transmitted to the specific person. In such a case, it is convenient if another e-mail related to an original incoming mail can be displayed in place of the original reply mail on mail reference screen 33 when the user writes a reply mail.

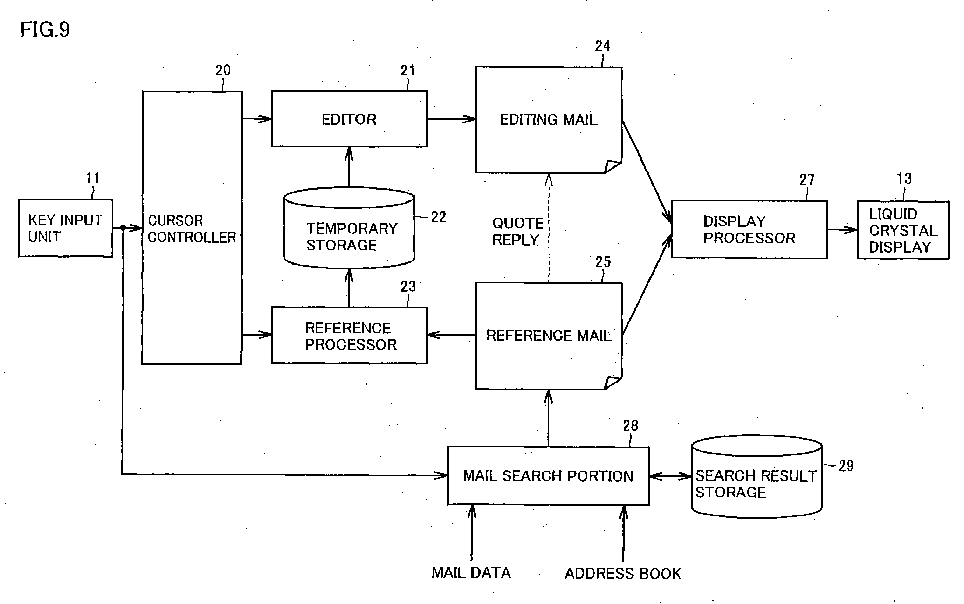

Fig. 9 shows an example the configuration of a main part of an e-mail editing device according to a third embodiment of the present invention. Referring to Fig. 9, another example of the editing process in processor 12 in Fig. 1 will be described. The e-mail editing device according to the third embodiment is different from that of the second embodiment shown in Fig. 6 with respect to the point that a mail search portion 28 and a search result storage 29 are provided in place of mail selector 26.

When the user writes a reply mail, mail search portion 28 searches for an e-mail in memory 14 on the basis of one or more data items in an original incoming mail. In the mail search, data items such as mail address, title, transmission/reception time, message and the like can be used as search keys. A case where a sender's mail address of an original incoming mail is used as a search key and mail search portion 28 searches for transmission/reception mails stored in memory 14 in a time sequential order will be described. The search process is executed when a mail switching operation is performed for the first time after mail reference screen 33 is displayed.

Mail search portion 28 extracts an e-mail whose sender or address is the sender mail address of an original incoming mail from all of e-mails in memory 14. Mail search portion 28 checks the sender mail address with incoming mails in reception tray 16. Mail search portion 28 checks incoming mails in transmission tray 17 with the sender mail address. Generally, an e-mail has only one sender address. Consequently, by performing search with the mail address, mail search portion 28 can easily extract an e-mail related to the e-mail.

Mail search portion 28 generates an index table in which indexes of e-mails extracted in such a manner are re-arranged in time sequence on the basis of transmission/reception time and stores it in search result storage 29.

The user can select the e-mails related by the mail address in such a manner in time sequence. Mail search portion 28 displays the message of the e-mail selected by the user onto mail reference screen 33. Specifically, when the user performs a key operation (a mail switching operation) for instructing switching of reference mails 25, reference mail 25 displayed on mail reference screen 33 is switched in time sequence each time the key operation is performed. The user can perform the mail switching operation by designating the switching direction on the time base.

Since the mail switching operation is not an operation of selecting an individual e-mail on the list display screen, it is performed by a simple key operation. The mail switching operation is, desirably, a single key operation but can be also realized by the key operation of twice or three times. For example, when the user presses the "#" key long, an e-mail having the immediately preceding transmission/reception time is displayed in mail reference screen 33 (hereinafter, the process in this case will be referred to as "scroll-up process"). When the user presses the "*" key long, the immediately subsequent e-mail is displayed on mail reference screen 3 3 (hereinafter, the process in this case will be referred to as "scroll-down process").

At this time, mail search portion 28 reads the index of an e-mail which is immediately preceding to an e-mail being displayed on the mail reference screen on the basis of the transmission/reception time from the index table in search result storage 29. Mail search portion 28 reads an older e-mail from memory 14 on the basis of the index and displays it on mail reference screen 33.

On the basis of the key operation instructing scroll-down by the user, mail search portion 28 reads the index of an e-mail which immediately follows the e-mail being displayed on the mail reference screen in accordance with the order based on the transmission/reception time from the index table of search result storage 29. Mail search portion 28 reads a newer e-mail from memory 14 on the basis of the index and displays it on mail reference screen 33.

If the e-mail does not exist when the user instructs scroll-up or scroll-down, mail search portion 28 displays the fact on mail reference screen 33 and does not perform the scroll-down or scroll-up process. In the case where mail search portion 28 performs the scroll-down process while the latest e-mail is being displayed by using a loop-shaped index table in search result storage 29, mail search portion 28 may display the oldest e-mail on mail reference screen 33. In the case where mail search portion 28 performs the scroll-up process while the oldest e-mail is being displayed, mail search portion 28 may display the latest e-mail on mail reference screen 33.

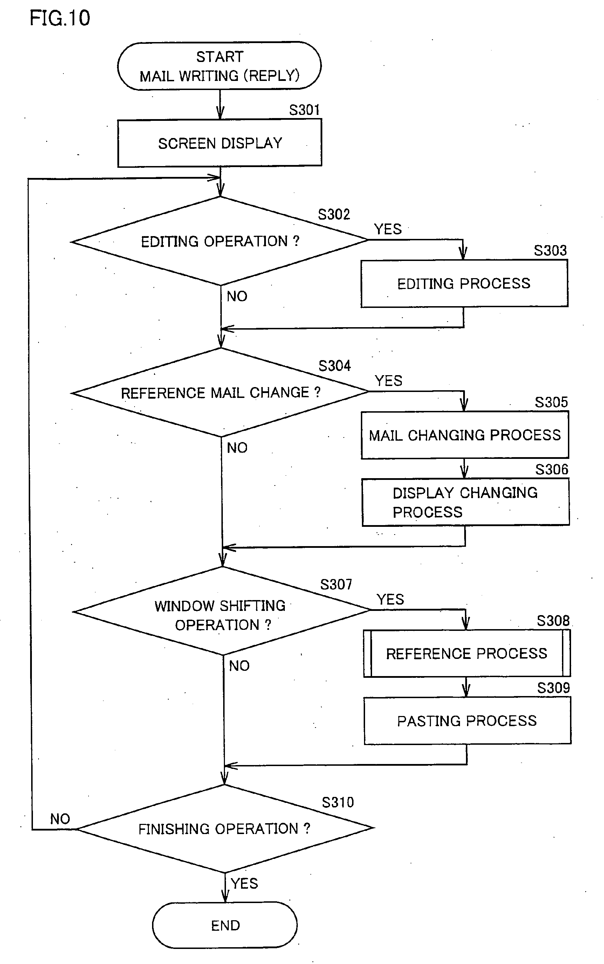

Steps S301 to S310 in the flowchart of Fig. 10 show an example of the operation at the time of writing a reply mail. Steps S301 to S303 and S307 to S310 are similar to the steps S 101 to S107 in the flowchart according to the second embodiment shown in Fig. 7.

When the user instructs a change in the reference mail (YES in step S304), an e-mail displayed on mail reference screen 33 is changed. Specifically, when the user instructs scroll-up or scroll-down of an e-mail displayed on mail reference screen 33, mail search portion 28 reads a mail index of an e-mail to be newly displayed from search result storage 29 (step S305). An e-mail is read from memory 14 on the basis of the index. Display processor 27 displays reference mail 25 read in such a manner onto mail reference screen 33 (step S306).

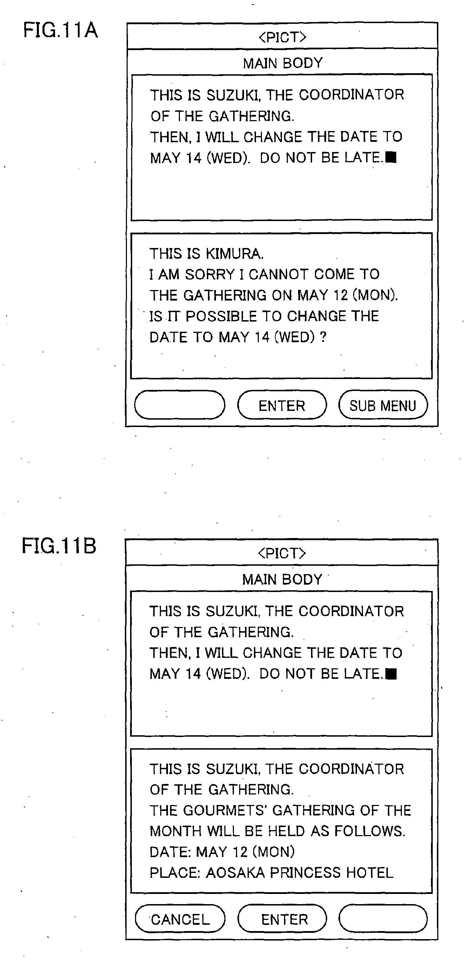

Figs. 11A to 11D show the details of an example of the procedure at the time of editing the body of a reply mail. The diagrams are shown as the procedure performed subsequent to the screen shown in Fig. 5D.

Referring to Fig. 11A, the original incoming mail is displayed on mail reference screen 33. When the user presses the "#" key long in this state to instruct scroll-up of an e-mail to be displayed on mail reference screen 33, an e-mail addressed to the sender of the original incoming mail being displayed is displayed on mail reference screen 33. Fig. 11B shows the state at this time.

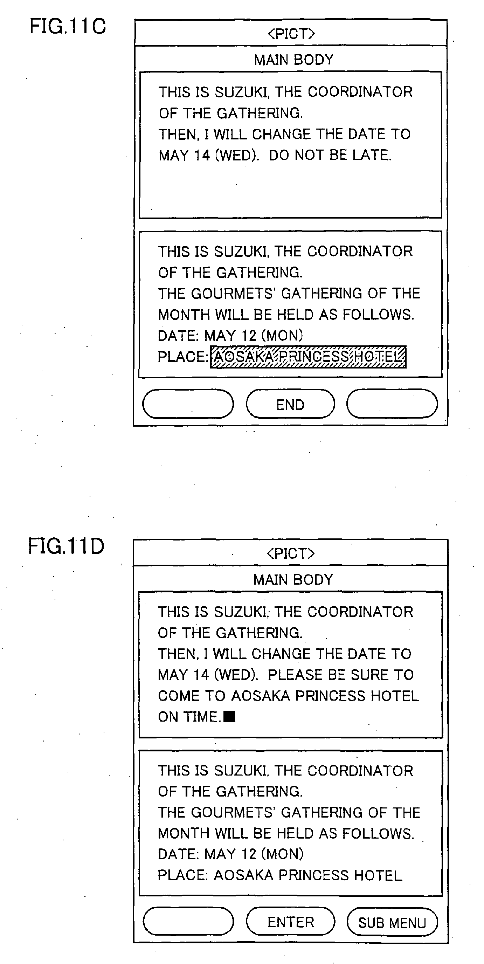

In a manner similar to that in the case of the original incoming mail in the second embodiment, the user can view and refer to the e-mail newly displayed on mail reference screen 33. Specifically, when the user presses the down arrow cursor-movement key long, the cursor moves to mail reference screen 33. When the user designates the start and end points of a character string to be copied, the data of the character string is copied to temporary storage 22. Fig. 11C shows the state at this time.

After completion of designation of an object to be copied, the cursor returns to message editing screen 32 and the copied character string is pasted into the body of an outgoing mail. Fig. 11D shows the state at this time.

According to the embodiment, the user can change reference mail 25 displayed on mail reference screen 33 on the basis of the key operation, so that the user can perform a mail editing work while viewing and referring to a desired e-mail. In such a manner, operability of the e-mail editing device can be improved.

Mail search portion 28 searches for e-mails related to a specific e-mail and displays the e-mails in order on mail reference screen 33 on the basis of a key operation of the user. Consequently, as the user can display the e-mails in order only by performing a simple key operation, the operability of the e-mail editing device can be remarkably improved.

For example, when the user writes a reply mail, not only the original reply mail but also other mails related to the original incoming mail can be displayed on mail reference screen 33. Thus, the user can edit an outgoing mail while viewing and referring to the related e-mails.

Particularly, mail search portion 28 extracts an e-mail whose sender or address coincides with the sender mail address of a specific incoming mail from e-mails stored in memory 14. Further, on the basis of a key operation of the user instructing a change in reference mail 25, mail search portion 28 displays the mails in time sequence. Therefore, the user can make e-mails transmitted/received to/from a specific person displayed in time sequence on the liquid crystal display.

Although an example of the case where the object to be searched by mail search portion 28 is all of e-mails in memory 14 has been described in the embodiment, the present invention is not limited to the case. For example, the user can set only incoming mails in reception tray 16 or only outgoing mails in transmission tray 17 as objects to be searched by designating a folder of an e-mail to be searched.

In the embodiment, the example of the case where mail search portion 28 extracts an e-mail on the basis of the sender address of the original incoming mail at the time of writing a reply mail has been described. However, the present invention is not limited to such a case. For example, the user may directly designate a mail address. In this case, extraction of an e-mail is not limited to search at the time of writing of a reply mail.

In the embodiment, an example in which mail search portion 28 searches for an e-mail and switches and displays it onto mail reference screen 33 in the mail editing device for displaying reference mail 25 on mail reference screen 33 has been described. However, the present invention is not limited to such a case. For example, an e-mail may be searched and displayed on the mail viewing screen in the mail viewing device having a screen configuration similar to that of a conventional cellular phone, to be more specific, a mail viewing device which displays a mail viewing screen on which at least an e-mail is viewed.

In the embodiment, the case where mail search portion 28 searches for an e-mail first, generates an index table, and stores it into search result storage 29 has been described. The present invention, however, is not limited to such a case. For example, each time the user instructs a change in reference mail 25, mail search 28 may search for an e-mail in memory 14.

In the foregoing embodiments, the example of the cellular phone having the e-mail transmitting/receiving function has been described. Since portable electronic apparatuses such as a cellular phone and a PDA (Personal Digital Assistant) have poor operability in user input means as compared with a general computer, the present invention is suitable particularly for the portable electronic apparatuses. However, the objects of the present invention are not limited to such portable electronic apparatuses but the present invention can be applied to various electronic apparatuses having the e-mail editing function.

### Fourth Embodiment

A fourth embodiment of the present invention will be described below. An electronic mail viewing device according to the embodiment can display an e-mail searched on the basis of a mail switching operation of the user.

The hardware configuration of the e-mail viewing device according to the fourth embodiment is the same as that of the e-mail editing device shown in Fig. 1 or Fig. 9. The functions of the apparatus are also the same. Therefore, the detailed description of the functions will not be repeated here.

Referring again to Fig. 9, mail search portion 28 of the e-mail viewing device searches for an e-mail on the basis of an input search condition. Display processor 27 generates and outputs data for displaying a screen on the basis of input data. The liquid crystal display displays an e-mail on the basis of the output data.

Specifically, as shown in Fig. 9, display processor 27 generates data for displaying an e-mail searched by mail search portion 28, that is, reference mail 25 onto liquid crystal display 13. Mail search portion 28 extracts an e-mail including data matching the search condition as a reference mail on the basis of a mail switching operation entered from the user via key input unit 11.

With the configuration, when the user enters a mail switching operation, liquid crystal display 13 can switch, for example, display of an e-mail to display of a searched e-mail. Therefore, the user can switch to display of another e-mail related to an e-mail being displayed without performing complicated operations.

The present invention has been described in detail but such description is for illustrative purposes only and is not limited. It is to be clearly understood that the spirit and scope of the present invention are defined only by the accompanying claims.

### Industrial Applicability

The present invention is applicable to an electronic apparatus having an editing function, in particular, a portable electronic apparatus having an e-mail editing function.

## Claims

1. An e-mail viewing device comprising:
a mail storage (14) storing a plurality of e-mails;
a display processor (27) displaying an e-mail stored in said mail storage onto a mail viewing screen;
an operation input unit (11) for a user to enter a mail switching operation for switching an e-mail on the mail viewing screen; and
a mail search portion (28) searching for an e-mail stored in said mail storage on the basis of the e-mail displayed on the mail viewing screen, wherein
said display processor displays the e-mail extracted by said mail search portion on the basis of the mail switching operation of the user.

2. The e-mail viewing device according to claim 1, wherein
said mail search portion extracts an e-mail whose sender or address matches the sender of an incoming mail displayed on the mail viewing screen.

3. The e-mail viewing device according to claim 2, wherein
said mail storage stores an outgoing mail and an incoming mail, and
said mail search portion checks with the address of an outgoing mail or the sender of an incoming mail.

4. An e-mail viewing device comprising:
a mail storage (14) storing a plurality of e-mails;
a display processor (27) displaying an e-mail stored in said mail storage onto a mail viewing screen;
an operation input unit (11) for a user to enter a mail switching operation for switching an e-mail on the mail viewing screen; and
a mail search portion (28) searching for an e-mail stored in said mail storage on the basis of the e-mail designated by the user, wherein
said display processor displays the e-mail extracted by said mail search portion on the basis of the mail switching operation of the user.

5. The e-mail viewing device according to claim 4, wherein
said mail storage stores an e-mail together with transmission/reception time of the e-mail,
said mail search portion extracts e-mails matching a search condition in time sequence of the transmission/reception times, and
said display processor sequentially switches and displays an e-mail extracted by said mail search portion on the basis of a mail switching operation of the user.

6. The e-mail viewing device according to claim 5, wherein
a movement direction on the time base is designated by the user as a mail switching operation on said operation input unit,
said mail search portion sequentially extracts e-mails matching the search condition in the movement direction on said time base, and
said display processor sequentially switches and displays the e-mails extracted by said mail search portion each time the user performs a mail switching operation.

7. The e-mail viewing device according to claim 4, wherein
an e-mail designated by the user is an e-mail displayed on the mail viewing screen when the mail switching operation is performed for the first time.

8. An e-mail editing device comprising:
a mail storage (14) storing a plurality of reference mails;
a display processor (27) simultaneously displaying a mail edition screen displaying an edition mail and a mail reference screen displaying a reference mail;
a temporary storage (22) storing data;
a reference processor (23) copying an object in a reference mail to said temporary storage;
an editor pasting the object in said temporary storage into an edition mail;
an operation input unit (11) for a user to enter a mail switching operation for switching a reference mail on the mail reference screen; and
a mail search portion (28) searching for the reference mail stored in said mail storage on the basis of the reference mail displayed on the mail reference screen,
wherein
said display processor displays the reference mail extracted by said mail search portion onto the mail reference screen on the basis of the mail switching operation of the user.

9. An e-mail editing device comprising:
a mail storage (14) storing a plurality of reference mails;
a display processor (27) simultaneously displaying a mail edition screen displaying an edition mail and a mail reference screen displaying a reference mail;
a temporary storage (22) storing data;
a reference processor (23) copying an object in a reference mail to said temporary storage;
an editor (21) pasting the object in said temporary storage into an edition mail; an operation input unit (11) for a user to enter a mail switching operation for switching a reference mail on the mail reference screen; and
a mail search portion searching for the reference mail stored in said mail storage on the basis of the reference mail designated by the user, wherein
said display processor displays the reference mail extracted by said mail search portion onto the mail reference screen on the basis of the mail switching operation of the user.

10. An e-mail editing device comprising:
a mail storage (14) storing data of each of a plurality of e-mails;
an operation input unit (11) for a user to enter an instruction regarding display of said plurality of e-mails;
a mail search portion (28) searching for an e-mail stored in said mail storage on the basis of data of the e-mail displayed according to said instruction;
a display processor (27) generating edition screen data for displaying the contents of an edition mail whose data is rewritable and reference screen data for displaying said searched e-mail as a reference mail whose data cannot be rewritten on the basis of said data in response to an instruction given by the user; and
a display (13) displaying a mail edition screen displaying the contents of said edition mail and a mail reference screen displaying the contents of said reference mail on the basis of said edition screen data and said reference screen data.

11. The e-mail editing device according to claim 10, further comprising:
a temporary storage (22) temporarily storing data;
a reference processor (23) storing object data included in said reference mail to said temporary storage; and
an editor (21) inserting object data stored in said temporary storage into said edition mail.

12. The e-mail editing device according to claim 11, wherein
said mail search portion searches for an e-mail stored in said mail storage on the basis of a reference mail displayed on said mail reference screen.

13. The e-mail editing device according to claim 12, wherein
said mail search portion extracts an e-mail whose sender or address matches the sender of said reference mail.

14. The e-mail editing device according to claim 11, wherein
said mail search portion searches for an e-mail stored in said mail storage on the basis of the reference mail designated by the user.

15. The e-mail editing device according to claim 14, wherein
said mail storage stores at least one of transmission time and reception time of said e-mail,
said mail search portion sequentially extracts e-mails matching a search condition included in the reference mail designated by the user at said transmission time or said reception time, and
said display processor sequentially switches and displays said extracted e-mails on the basis of the mail switching operation of the user.

16. The e-mail editing device according to claim 15, wherein
said operation input unit receives an input of a movement direction on a time base designated by the user, and
said mail search portion sequentially extracts e-mails matching said search condition in the movement direction on said time base.

17. The e-mail editing device according to claim 11, further comprising:
an input detector (20) detecting an input of said mail switching operation, wherein
an e-mail designated by the user is a mail displayed on said mail viewing screen when said mail switching operation is input for the first time.
